# EUROPEAN PATENT SPECIFICATION

(11) **EP 1 602 280 B1**
(45) Date of publication and mention of the grant of the patent: **13.09.2006**
(21) Application number: 05101442.1
(22) Date of filing: 25.02.2005
(51) Int. Cl.: A21B 3/13

(54) **Baking tin and manufacturing method thereof**
Backblech und Verfahren zu dessen Herstellung
Moule de cuisson et son procédé de fabrication

(30) Priority: 10.08.2004 IT MI20041640
(43) Date of publication of application: 07.12.2005
(73) Proprietor: CARTOTECNICA ESSE-BI S.r.l., 22030 ORSENIGO (COMO) (IT)
(72) Inventor: Zuffi, Tiziano, 22030, Orsenigo (Como) (IT)
(74) Representative: Ponzellini, Gianmarco

(56) References cited:
- EP-A- 0 244 372
- EP-A- 0 441 102
- DE-U1- 20 304 058
- US-A- 5 833 056

## Description

The present invention relates to a baking tin comprising at least one holding tray for foodstuffs and a supporting structure receiving one or more trays in engagement. In particular, the tray comprises one bottom wall from which a plurality of consecutive side walls extend away, which walls in combination with the bottom wall define a holding cavity. The supporting structure comprises at least one through opening, delimited by a plurality of consecutive edges and defining the seat for receiving the tray.

Such an arrangement is known for DE-U-20304058.

The present invention also relates to a method of manufacturing such a baking tin.

The invention is particularly concerned with baking tins that are used in the food sector for preparing sweets, cakes or similar confectionery products ready to be eaten.

In fact, these types of tins enable the costs for cleaning the tin after use to be eliminated and the waste material to be easily recycled and are particularly adapted for applications in which re-use of the baking tin is not envisaged.

In the known art baking tins are provided in which the trays can be engaged in the supporting structure through suitable connecting means. In particular, the trays of the known art have a substantially parallelepiped shape defined by four side walls and a bottom wall. Two opposite side walls comprise respective flaps that are turned over on the outer surfaces of the two other side walls defining the head walls of the tray. In other words, two flaps are present on the outer surface of each of the two head walls, said flaps partly overlapping the head wall. The two tailpieces extend each from an edge of the head wall towards the wall centre, and are separated a predetermined distance from each other so that the respective free edges face each other. A notch or recess is formed in one of these edges in such a manner that it faces and is in alignment with a corresponding recess formed in the free edge of the other flap. The combination of the two recesses defines an engagement seat for a tab formed in the supporting structure.

This tab extends in cantilevered fashion towards the inside of an opening formed in the supporting structure starting from a middle position of a side of the opening itself.

Likewise, the other head wall of the tray comprises two flaps provided with two other recesses facing each other and in mutual alignment, engaging a similar tab of the supporting structure.

The tray is then introduced, starting from the bottom wall, into the opening formed in the supporting structure and it comes into engagement, through the recesses, with the flaps jutting out towards the inside of the opening.

The Applicant has however found that the baking tins of the known art can be improved under different points of view.

First of all, the baking tins of the known art cannot be always lifted and transported in an efficient manner. In fact, the protuberance jutting out towards the inside of the opening in the supporting structure can sag when submitted to high shearing stresses, due to the weight of the tray contents for example.

This drawback is particularly felt when the tin and therefore the protuberance is made of thin paperboard for food use which, as known, has reduced mechanical features.

In addition, the contact surface between the supporting structure flap and the tray recesses substantially results from the thickness of the flaps in which the recesses are formed. Since, after all, this thickness is the thickness of the side walls of which the flaps are part and these side walls must be thin to enable heat passage and therefore cooking and to reduce the tin manufacturing costs, the contact surface between the supporting structure flap and the tray recesses is very limited. This reduced thickness makes the above mentioned drawback more serious.

In addition, the baking tins of the known art are not suitable to enable the trays to be repeatedly introduced into and removed from the supporting structure.

In fact, since the tabs are obtained in cantilevered fashion towards the inside of the opening in the supporting structure and are not very adapted to withstand shearing stresses, they can be easily damaged and do not lend themselves to be repeatedly stressed.

Finally, a high manufacturing accuracy is required for the trays above all with reference to the tabs and the recesses that must be perfectly aligned and carefully spaced apart, which will bring about the risk either of too much waste or of producing tin assemblies that are not perfectly tied up.

In this context, the main technical task of the present invention is to propose a baking tin and a manufacturing method thereof enabling elimination of the above mentioned drawbacks.

In particular, it is an aim of the present invention to make available a baking tin and a method of manufacturing the same in which a reliable engagement of the different components is ensured and safe lifting and easy transport is enabled.

It is a further aim of the present invention to provide a baking tin and a method of manufacturing the same enabling the tray to be repeatedly removed from and inserted into the supporting structure.

Another aim of the invention consists in providing a baking tin and a manufacturing method thereof in which low production times and costs are required.

The technical task mentioned and the aims specified are substantially achieved by a baking tin and a manufacturing method thereof, comprising the technical features set out in one or more of the appended claims.

Further features and advantages of the present invention will become more apparent from the detailed description given by way of non-limiting example, of a preferred, but not exclusive, embodiment of a baking tin and a method of manufacturing the same, as shown in the accompanying drawings, in which:
- Fig. 1 is a perspective view of a baking tin in accordance with the present invention;
- Fig. 2 is a perspective view of an element constituting the tin in Fig. 1;
- Fig. 3 is a blank from which the element in Fig. 2 is obtained.

With reference to the drawings, a baking tin in accordance with a first aspect of the present invention has been generally identified by reference numeral 1.

The baking tin 1 comprises at least one holding tray 2 for foodstuffs and a supporting structure 3 for one or more trays 2.

Advantageously, both the tray 2 and the supporting structure 3 are made of paper or thin paperboard material for food use.

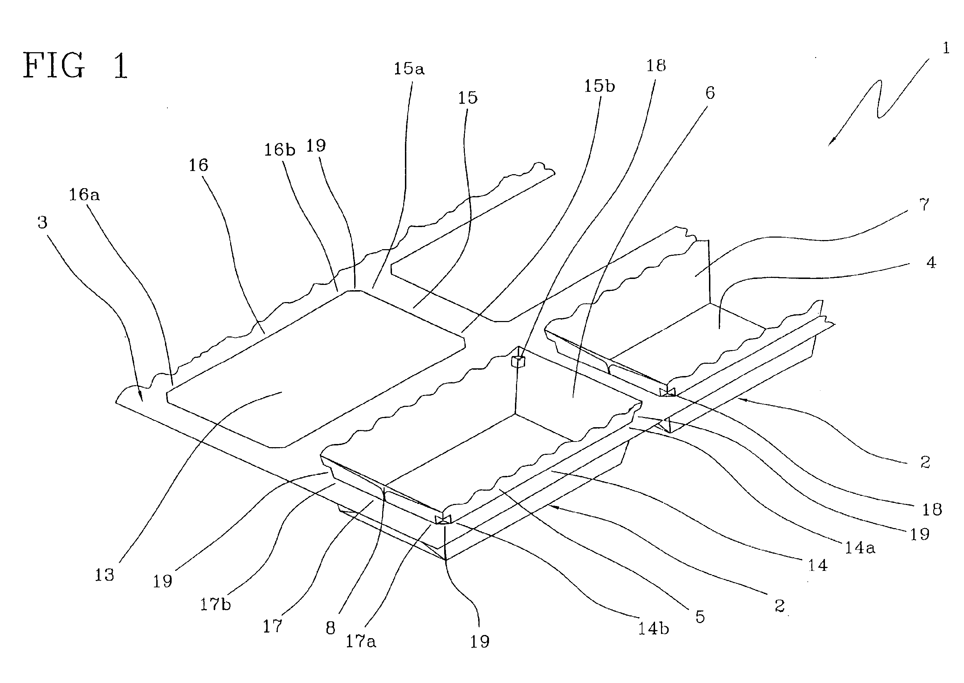

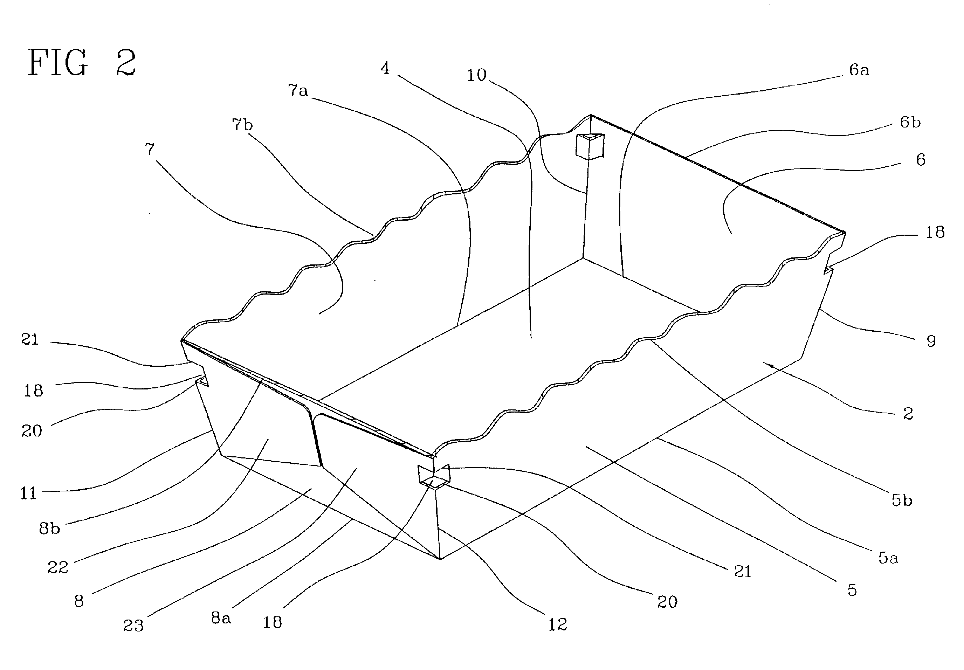

The tray 2 shown in Fig. 1 and highlighted in Fig. 2 comprises a bottom wall 4 and a plurality of side walls 5, 6, 7, 8 extending peripherally away from the bottom wall 4.

For clarity's sake, reference will be expressly made to one embodiment shown in the accompanying drawings, in which the tray 2 comprises four side walls. However, the baking tin being the object of the present invention can be embodied with holding trays having any number of side walls, but in any case a number equal to or greater than 3. From the following specification it will be clear and univocal how the tray 2 can be modified to make trays with any wished number of side walls.

In the preferred embodiment, the tray 2 comprises a first 5, second 6, third 7 and fourth 8 side walls. The first 5 and third 7 side walls are opposite to each other and extend from first opposite sides of the bottom wall 4. The second 6 and fourth 8 side walls are opposite too and extend from second opposite sides of the bottom wall 4. The side walls 5, 6, 7, 8, in combination with the bottom wall 4, therefore define a holding cavity of tray 2.

Tray 2 further comprises a plurality of corners 9, 10, 11, 12 defined by the intersections of the side walls 5, 6, 7, 8. In particular, each corner 9, 10, 11, 12 is defined by the intersection of two consecutive side walls.

The supporting structure 3 comprises at least one through opening 13 (and generally a plurality of openings 13) which is delimited by consecutive and perimetral edges 14, 15, 16, 17 being an integral part of the supporting structure 3.

Advantageously, the through opening 13 defines a receiving seat for tray 2. In other words, opening 13 has such sizes that it allows insertion of the tray 2 from the bottom wall 4, said tray being retained at least partly in the supporting structure 3, as clarified in the following of the present specification.

Advantageously, to join the tray 2 to the supporting structure 3 in a steady manner, at least one of the corners 9, 10, 11, 12 of tray 2 comprises an undercut 18 and the supporting structure 3 comprises at least one connecting portion 19 extending between two consecutive edges of the opening 13. Junction between the tray 2 and supporting structure 3 is obtained through engagement of the undercut 18 with the connecting portion 19.

In more detail, the connecting portion 19 extends between end portions 14a, 15b of two consecutive edges 14, 15 and connects the two edges to each other. In other words and as shown in the figure, the connecting portion 19 defines a single free side facing the inside of the opening which goes on maintaining a convex geometry. The undercut 18 in the corner 9 included between the two consecutive side walls 5, 6 corresponding to the edges 14, 15 of the opening retains the connecting portion 19 and thus carries out a junction between the tray 2 and supporting structure 3.

To this aim, the undercut 18 comprises a first shoulder 20 defining a base surface designed for engagement of the connecting portion 19 and acting as an abutment therefor. In addition, the undercut 18 comprises a second shoulder 21 defining a top surface designed for engagement of the connecting portion 19 and retaining the latter in the undercut 18.

To make junction between the supporting structure 3 and tray 2 steadier, each further corner 10, 11, 12 of the tray 2 comprises a respective undercut 18 identical with the above described one.

In addition, at each end of two consecutive edges 14a, 14b, 15a, 15b, 16a, 16b, 17a, 17b of opening 13, the supporting structure 3 comprises a connecting portion 19 identical with the above described one. In other words, the openings 13 designed to receive the trays will be defined by eight rectilinear sides, four main sides 14, 15, 16, 17, that are opposite two by two and four connecting portions 19.

In this manner, when the tray 2 is engaged in an opening 13 of the supporting structure 3, the tray 2 is secured to the supporting structure 3 at four mutually opposite points.

As said, the mere engagement between the tray 2 and opening 13, also without taking into account the contribution offered by the undercuts 18 and connecting portions 19, enables partial retention of the tray 2 in the supporting structure 3.

In fact, the tray 2 advantageously has a frustoconical shape and, when fitted in opening 13, bears against the edges 14, 15, 16, 17 by its side walls 5, 6, 7, 8. In this manner, an abutment between the side walls 5, 6, 7, 8 of tray 2 and the edges of opening 13 is generated, which abutment helps in retaining the tray 2 in the supporting structure 3.

In more detail, each side wall 5, 6, 7, 8 comprises a first side 5a, 6a, 7a, 8a connected to a respective side of the bottom wall 4 and a second side 5b, 6b, 7b, 8b opposite to the first side, facing an entry section of the holding cavity of the tray.

The first sides 5a, 6a, 7a, 8a of the side walls have smaller sizes than the second sides 5b, 6b, 7b, 8b thus defining a trapezoidal shape of the side walls 5, 6, 7, 8 and giving the tray 2 the desired frustoconical conformation.

Advantageously, each of the two opposite side walls 5, 7 comprises two flaps or tailpieces 22, 23. The two tailpieces 22, 23 are each folded over a predetermined surface, the outer surface in the preferred embodiment, of a corresponding side wall 6, 8 that is devoid of the two tailpieces 22, 23. In this way, the corners 9, 10, 11, 12 are reinforced, which will bring about a reinforcement of the undercuts 18 formed therein.

In a further embodiment not shown, the side walls 6, 8 too are provided with a respective tailpiece of one piece construction with the flaps 22 and 23, respectively. In this way the tray does not show through openings in the side walls 5, 6, 7, 8 except for the cuts.

In particular the flaps 22, 23 are folded over towards the respective adjacent side wall 6, 8 as shown in Fig. 2; however instead of bearing on the wall 6, 8 itself they are in contact with the tailpieces of the wall 6, 8 that in turn directly bear on the above mentioned wall defining a multi-layered bellows-type structure. Thus from the inside of the tray towards the outside there will be the side wall 8, its tailpiece and then the flap 23.

In accordance with a second aspect of the present invention, a method of manufacturing the above described baking tin will be described.

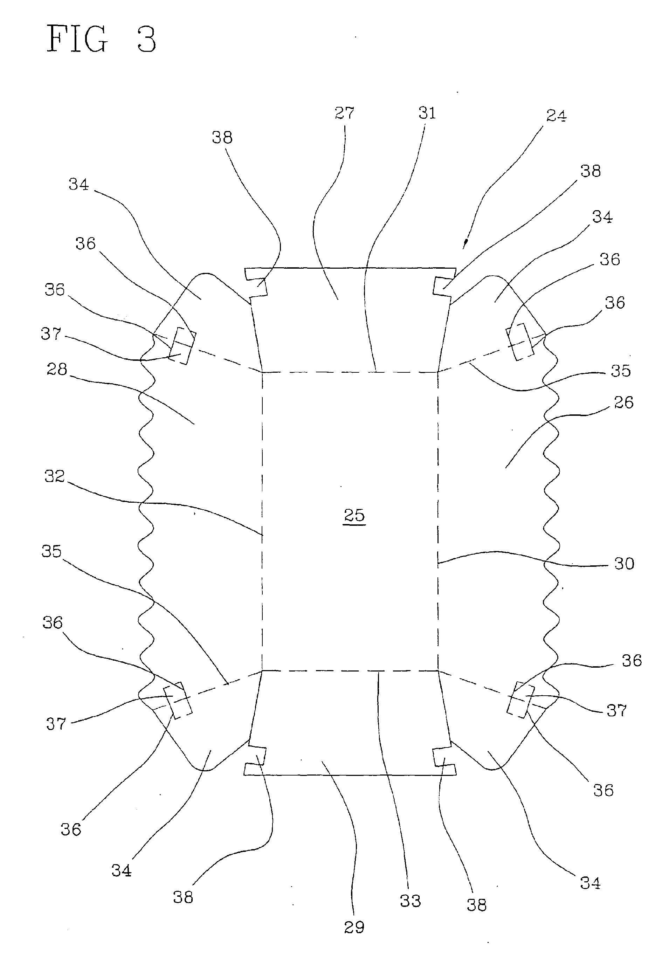

Tray 2 is obtained starting from a flat blank denoted at 24 in Fig. 3. Advantageously, the blank 24 is made of paper or thin paperboard material for food use.

The blank 24 comprises a central panel 25 defining the bottom wall 4 of the tray 2. Peripherally of the central panel 25 a plurality of side panels 26, 27, 28, 29 are connected and define the side walls 5, 6, 7, 8 of tray 2. Connection between the side panels 26, 27, 28, 29 and central panel 25 is obtained through a plurality of weakening lines 30, 31, 32, 33 constituting a guide for folding of the side panels relative to the central panel 25.

At least one of the side panels 26, 27, 28, 29 comprises at least one flap 34 that, in combination with an adjacent side wall, forms corner 9. In particular, after folding the side panels 26, 27, 28, 29 thereby forming the side walls 5, 6, 7, 8, the flap 34 is folded over in contact with a predetermined surface of a side wall 6 in this way defining one of the four corners 9, 10, 11, 12 of tray 2. In other words, once the flap 34 has been folded over to its final position, it constitutes one of the above mentioned tailpieces 22, 23.

To facilitate folding of flap 34, the latter is connected to the side panel through a folding line 35.

Advantageously, flap 34 has at least two parallel cuts 36 extending between the side panel 5 provided with the flap 34, and the flap 34 itself. The two parallel cuts 36 can define a foldable portion 37 that, once the blank 24 has been folded to form tray 2, constitutes an undercut 18.

In particular, the foldable portion 37 is adapted to be folded in such a manner that it juts out towards the inside of tray 2. In other words, the foldable portion 37 not only constitutes an undercut 18 but also forms a confining wall for the undercut 18 itself.

Advantageously, to enable the undercut-confining wall to jut out towards the inside of the tray 2, the side panel 6 over which the flap 34 is folded has a notch 38 at the position to be at least partly occupied by the confining wall.

In an alternative embodiment not shown, the cuts 36 are four in number and parallel two by two. In this case no foldable portion 37 is defined but merely a hole astride the flap 34 and the side panel 5 in which said flap 34 is present. This hole, once the blank 24 has been folded, forms an undercut 18.

Advantageously, to form a tray 2 with four side walls, the side panels 26, 27, 28, 29 are four in number and symmetric two by two relative to the central panel 25.

In addition, two opposite side panels 26, 28 of the four side panels 26, 27, 28, 29 each comprise two flaps 34 at peripheral and opposite positions relative to the side panel itself, in such a manner as to define and reinforce the four corners 9, 10, 11, 12 of the tray 2.

In this case too, each of the four flaps 34 comprises at least two parallel cuts 36 to form the four undercuts 18 at corners 9, 10, 11, 12.

The supporting structure 3 is obtained through punching of a thin paperboard material for food use to define opening 13. Advantageously, the connecting portions 19 between the edges of opening 13 are obtained during the punching operation for creation of opening 13. In fact, as said, the connecting portions 19 are an integral part of the supporting structure 3.

Clearly, openings 13 formed in the supporting structure 3 will be the same in number as the trays 2 with which the baking tin 1 is wished to be provided.

Therefore, to make a tray 2 it is sufficient to punch a first thin paperboard sheet for food use so as to obtain a blank 24 and fold said blank 24 along the folding lines 30, 31, 32, 33, 35.

At this point, for assembling the baking tin 1 it is necessary to insert the tray 2 into the opening 13 of the supporting structure 3 and exert a light pressure on the tray 2 to cause mutual engagement of the undercuts 18 and connecting portions 19. To remove the tray 2 from the supporting structure 3, it is necessary to exert pressure in the opposite way relative to the pressure for insertion of tray 2 into opening 13, so as to elastically deform the undercuts 18 and connecting portions 19 causing uncoupling of same.

The present invention achieves the intended purposes.

In fact, the undercuts in the tray corners and the connecting portions between the edges of the opening in the supporting structure have a good mechanical resistance to deformation, thereby enabling safe lifting and easy transportation of the baking tin.

In addition, this feature enables the tray to be repeatedly removed from and inserted into the supporting structure without damaging the connecting portions or the undercuts.

Finally, since other operations are not required, apart from punching of the panels made of thin paperboard material for food use of any thickness, low production times and costs are involved in putting into practice the baking tin manufacturing method in accordance with the invention.

## Claims

1. A baking tin comprising:
- at least one holding tray (2) for foodstuffs comprising:
· a bottom wall (4),
. a plurality of consecutive side walls (5, 6, 7, 8) extending away from the bottom wall (4) to define a holding cavity,
. a plurality of corners (9, 10, 11, 12) each defined by two consecutive side walls;
- a supporting structure (3) comprising:
· at least one through opening (13) delimited by a plurality of consecutive edges (14, 15, 16, 17) to define a seat for receiving said tray (2) in said supporting structure (3),
**characterised in that:**
- at least one of said corners (9, 10, 11, 12) of said tray (2) comprises an undercut (18),
- said supporting structure (3) comprises at least one connecting portion (19) between two consecutive edges (14, 15) of the opening (13),
- said undercut (18) can be engaged by said connecting portion (19) to join said tray (2) to said supporting structure (3).

2. A baking tin as claimed in claim 1, wherein said undercut (18) comprises a first shoulder (20) defining a base surface for abutment and engagement of the connecting portion (19) between two consecutive edges of the opening (13) and a second shoulder (21) defining a top surface for retaining said connecting portion (19) in the undercut (18).

3. A baking tin as claimed in claim 1 or 2, wherein said connecting portion (19) is an integral part of said supporting structure (3) and extends between end portions (14a, 15b) of two consecutive edges (14, 15) of the opening (13) thereby connecting them; said supporting structure (3) being flat.

4. A baking tin as claimed in anyone of the preceding claims wherein said supporting structure (3) and tray (2) are mainly made of paper or thin paperboard material preferably for food use.

5. A baking tin as claimed in anyone of the preceding claims wherein each corner (9, 10, 11, 12) formed between two consecutive side walls comprises an undercut (18); each undercut (18) being susceptible of engagement in a respective connecting portion (19) between two edges of said opening (13).

6. A baking tin as claimed in anyone of the preceding claims wherein each side wall (5, 6, 7, 8) comprises a first side (5a, 6a, 7a, 8a) connected to the bottom wall (4) and a second side (5b, 6b, 7b, 8b) opposite to the first side and facing an entry section of the holding cavity of the tray (2); said side walls (5, 6, 7, 8) being of trapezoidal shape and preferably having said second sides (5b, 6b, 7b, 8b) of larger size than the respective first sides (5a, 6a, 7a, 8a) to define a frustoconical shape of the tray (2).

7. A baking tin as claimed in anyone of the preceding claims wherein said edges (14, 15, 16, 17) of the opening (13) in the supporting structure (3) are in contact with said side walls (5, 6, 7, 8) of the tray (2) following engagement of the connecting portion (19) in the undercut (18).

8. A baking tin as claimed in anyone of the preceding claims wherein two opposite ones (5, 7) of said side walls (5, 6, 7, 8) of the tray (2) comprise two flaps (22, 23), the two other opposite side walls (6, 8) also comprising two tailpieces of one piece construction with said flaps (23) to define a multi-layered structure closed towards the outside in which said flaps (23) are folded over and in contact with the tailpieces in turn folded over, which are positioned in parallel and in contact with said side wall (6; 8).

9. A baking tin as claimed in anyone of the preceding claims wherein said tray (2) is made up of a single sheet of paper material and is obtained starting from a flat blank (24).

10. A flat blank preferably made of paper or thin paperboard material for food use, to make a holding tray for foodstuffs, comprising:
- a central panel (25) to define a bottom wall (4) of the tray (2),
- a plurality of side panels (26, 27, 28, 29) peripherally connected to the central panel (25) through respective weakening lines (30, 31, 32, 33) to define a plurality of side walls (5, 6, 7, 8) of the tray (2),
- at least one (26) of said side panels (26, 27, 28, 29) comprising:
. at least one flap (34) to define a corner (9) of the tray (2) in combination with an adjacent side panel (27),
**characterised in that** said at least one side panel (26) comprising said flap (34) has:
- at least two parallel cuts (36) extending between said side panel (26) and flap (34) to define an undercut (18) in said corner (9).

11. A blank as claimed in claim 10, comprising a first pair of said panels (26, 28) and a second pair of said panels (27, 29) that are symmetric with respect to the central panel (25); each side panel (26, 28) of said first pair respectively comprising two flaps (34) and at least two parallel cuts (36) extending between the side panel (26, 28) and the first one of said two flaps (34) and at least two parallel cuts (36) extending between said side panel (26, 28) and the second one of said two flaps (34) to define four undercuts (18) in as many corners (9, 10, 11, 12).

12. A blank as claimed in claim 11, wherein each pair of said cuts (36) defines a foldable portion (37) designed to jut out towards the inside of the tray (2) to define a reinforcing element for said undercuts (18), or alternatively wherein said cuts (36) are defined by material removal from said side panel (26, 28) and from the second one of said flaps (34) so as to define a hole in said walls.

13. A method of manufacturing a baking tin **characterised in that** it comprises the steps of:
- punching a first thin paperboard sheet for food use so as to obtain a blank (24) as claimed in claim 12,
- punching a second thin paperboard sheet for food use to define at least one opening (13) delimited by a plurality of consecutive edges (14, 15, 16, 17) and a connecting portion (19) at each pair of consecutive edges,
- folding said blank (24) along the weakening lines (30, 31, 32, 33) to define a bottom wall (4) and four side walls (5, 6, 7, 8) ,
- folding each flap (34) over towards a predetermined surface of a corresponding side wall (27, 29) of the second pair of side panels to define a tray (2) having four corners (9, 10, 11, 12),
- inserting said tray (2) into said opening (13) forcing the insertion of the connecting portions (19) into the corresponding undercuts (18).

## Patentansprüche

1. Backblech umfassend:
- mindestens eine Wanne (2) zur Aufnahme von Lebensmitteln, umfassend:
• eine Bodenwand (4),
• eine Vielzahl von nacheinanderfolgenden Seitenwänden (5, 6, 7, 8), die sich von der Bodenwand (4) zur Festlegung eines Aufnahmeraumes weg erstrecken,
• eine Vielzahl von Kanten (9, 10, 11, 12) die jeweils von zwei nacheinanderfolgenden Seitenwänden festgelegt sind;
- einen Tragaufbau (3) umfassend:
• mindestens eine durchgehende Öffnung (30), die durch eine Vielzahl von aneinanderfolgenden Rändern (14, 15, 16, 17) zur Festlegung eines Aufnahmesitzes der Wanne (2) im Tragaufbau (3) begrenzt ist;
**dadurch gekennzeichnet, dass**:
- mindestens eine der Kanten (9, 10, 11, 12) der Wanne (2) eine Hinterschneidung (18) aufweist,
- der Tragaufbau (3) mindestens einen Übergang (19) zwischen den beiden nacheinanderfolgenden Rändern (14, 15) der Öffnung (13) umfasst,
- die Hinterschneidung (18) mit dem Übergang (19) im Eingriff kommt, um die Wanne (2) mit dem Tragaufbau (3) zu vereinen.

2. Backblech nach Anspruch 1, in dem die Hinterschneidung (18) eine erste Schulter (20), die eine Basisfläche zum Ergreifen des Überganges (19) zwischen den beiden nacheinanderfolgenden Rändern der Öffnung (13)festlegt, und eine zweite Schulter (21) umfasst, die eine oberste Fläche zum Halten des Überganges (19) in der Hinterschneidung (18) festlegt.

3. Backblech nach Anspruch 1 oder 2, in dem der Übergang (19) ein integrierender Teil des Tragaufbaus (3) ist und sich zwischen den Endabschnitten (14a, 14b) der beiden nacheinanderfolgenden Ränder (14, 15) der Öffnung (13)unter Übergang derselben erstreckt; wobei der Tragaufbau (3) eben ist.

4. Backblech nach einem beliebigen der vorstehenden Ansprüche, in dem der Tragaufbau (3) und die Wanne (2) hauptsächlich aus Papier oder Karton, bevorzugter Weise für Lebensmittelzwecke bestehen.

5. Backblech nach einem beliebigen der vorstehenden Ansprüche, in dem jede durch zwei nacheinanderfolgenden Seitenwände gebildete Kante (10, 11, 12) eine Hinterschneidung (18) aufweist; wobei jede Hinterschneidung (18) in einem entsprechenden Übergang (19) zwischen zwei Rändern der Öffnung (13) in Eingriff kommt.

6. Backblech nach einem beliebigen der vorstehenden Ansprüche, in dem jede Seitenwand (5, 6, 7, 8) eine erste, mit der Bodenwand (4) verbundene Seite (5a, 6a, 7a, 8a) und eine zweite Seite (5b, 6b, 7b, 8b) umfasst, die der ersten abgewandt ist und einem Eingangsabschnitt des Aufnahmeraumes der Wanne (2) gegenüberliegt; wobei die Seitenwände (5, 6, 7, 8) trapezförmig sind und bevorzugter Weise die zweiten Seiten (5b, 6b, 7b, 8b) gegenüber den entsprechenden ersten Seiten (5a, 6a, 7a, 8a) eine größere Abmessung besitzen, um eine kegelstumpfförmige Ausbildung der Wanne (2) festzulegen.

7. Backblech nach einem beliebigen der vorstehenden Ansprüche, in dem die Ränder (14, 15, 16, 17) der Öffnung (13) im Tragaufbau (3) mit den Seitenwänden (5, 6, 7, 8) der Wanne (2) zufolge des Eingriffes des Überganges (19) in der Hinterschneidung (18) in Berührung sind.

8. Backblech nach einem beliebigen der vorstehenden Ansprüche, in dem die beiden gegenüberliegenden Seitenwände (5, 7) der Seitenwände (5, 6, 7, 8) der Wanne (2) zwei Zungen (22, 23) umfassen, wobei die beiden anderen gegenüberliegenden Seitenwände (6, 8) auch sie zwei Fortsätze umfassen, die mit den Zungen (23) zur Festlegung eines vielschichtigen, nach außen geschlossenen Aufbaues umfast, in dem die Zungen (23) gebogen und in Berührung an den ihrerseits gebogenen Fortsätzen sind, die parallel zur Seitenwand (6; 8) positioniert sind, die parallel und in Berührung zu der Seitenwand (6; 8) angeordnet sind.

9. Backblech nach einem beliebigen der vorstehenden Ansprüche, in dem die Wanne (2) aus einer einzigen Folie aus Papiermaterial besteht und ausgehend von einer ebenen Vorlage (24) erhalten wird.

10. Ebene Vorlage, bevorzugter Weise aus Papier oder Karton für Lebensmittelzwecke zur Herstellung einer Aufnahmewanne für Lebensmittel, umfassend:
- eine mittige Platte (25) zur Festlegung einer Bodenwand (4) der Wanne (2);
- eine Vielzahl von Seitenplatten (26, 27, 28, 29), die längs des Umfanges mit der mittigen Platte (25) über entsprechende Schwächungslinien (30, 31, 32, 33) zur Festlegung der Vielzahl von Seitenwänden (5, 6, 7, 8) der Wanne (2) verbunden sind,
- mindestens eine (26) der Seitenplatten (26, 27, 28, 29) umfassend:
• mindestens eine Zunge (34) zur Festlegung in Kombination mit einer anliegenden Seitenplatte (27) einer Kante (9) der Wanne (2);
**dadurch gekennzeichnet, dass** die mindestens eine, die Zunge (34) umfassende Seitenplatte (26) aufweist:
- mindestens zwei parallele Einschnitte (36), die sich zwischen der Seitenplatte (26) und der Zunge (34) zur Festlegung einer Hinterschneidung (18) in der Kante (9) erstrecken.

11. Vorlage nach Anspruch 10, umfassend ein erstes Paar von Seitenplatten (26, 28) und ein zweites Paar von Seitenplatten (27, 29) die zu der mittigen Platte (25) symmetrisch sind; wobei jede Seitenplatte (26, 28) des ersten Paares jeweils zwei Zungen (34) und mindestens zwei parallele Einschnitte (36) umfasst, die sich zwischen der Seitenplatte (26, 28) und der ersten der beiden Zungen (34) erstrecken, und mindestens zwei parallele Einschnitte (36), die sich zwischen der Seitenplatte (26, 28) und der zweiten der beiden Zungen (34) zur Festlegung von vier Hinterschneidungen (18) in gleich vielen Kanten (9, 10, 11, 12) erstrecken.

12. Vorlage nach Anspruch 11, in dem jedes Paar von Einschnitten (36) einen faltbaren Abschnitt (37) festlegt, der dazu bestimmt ist, die Wanne (2) nach innen auszuladen zur Festlegung eines Verstärkungselementes der Hinterschneidungen (18) oder wechselweise in der die Einschnitte (36) durch eine Materialabtragung von der Seitenplatte (26, 28) und von der zweiten der Zungen (34) festgelegt sind, wobei eine Bohrung in den Wänden festgelegt wird.

13. Verfahren zur Herstellung eines Backbleches, **dadurch gekennzeichnet, dass** es folgende Schritte umfasst:
- Stanzen eines ersten Kartons für Lebensmittelzwecke um eine Vorlage (24) gemäß Anspruch 12 zu erhalten,
- Ausstanzen eines zweiten Kartons für Lebensmittelzwecke zur Festlegung mindestens einer Öffnung (13), die durch eine Vielzahl von nacheinanderfolgenden Rändern (14, 15, 16, 17) und einen Übergang (19) im Bereich eines jeden Paars von nacheinanderfolgenden Rändern festgelegt ist,
- Falten der Vorlage (24) längs der Schwächungslinien (30, 31, 32, 33) zur Festlegung einer Bodenwand (4) und von vier Seitenwänden (5, 6, 7, 8)
- Umfalten einer jeden Zunge (34) in Richtung einer vorgegebenen Fläche einer entsprechenden Seitenplatte (27, 29) des zweiten Paars von Seitenplatten zur Festlegung einer Wanne (2) mit vier Kanten (9, 10, 11, 12),
- Einfügen der Wanne (2) in die Öffnung (13), wobei die Übergänge (19) in die entsprechenden Hinterschneidungen (18) eingepresst werden.

## Revendications

1. Moule de cuisson comprenant:
- au moins un plateau de réception (2) pour produits alimentaires comprenant:
· une paroi de fond (4),
· une pluralité de parois latérales consécutives (5, 6, 7, 8) s'étendant en éloignement de la paroi de fond (4) pour définir une cavité de logement,
. une pluralité d'arêtes (9, 10, 11, 12) chacune définie par deux parois latérales consécutives;
- une structure support (3) comprenant:
. au moins une ouverture de passage (13) délimitée par une pluralité de bords consécutifs (14, 15, 16, 17) pour définir un siège pour recevoir ledit plateau (2) dans ladite structure support (3),
**caractérisé en ce que**:
- au moins une desdites arêtes (9, 10, 11, 12) dudit plateau (2) comporte un évidement (18),
- ladite structure support (3) se compose d'au moins une portion de raccordement (19) entre deux bords consécutifs (14, 15) de l'ouverture (13),
- ledit évidement (18) peut être engagé par ladite portion de raccordement (19) pour unir ledit plateau (2) à ladite structure support (3).

2. Moule de cuisson selon la revendication 1, dans lequel ledit évidement (18) comporte un premier épaulement (20) définissant une surface de base pour la butée et l'engagement de la portion de raccordement (19) entre deux bords consécutifs de l'ouverture (13) et un deuxième épaulement (21) définissant une surface supérieure pour retenir ladite portion de raccordement (19) dans l'évidement (18).

3. Moule de cuisson selon la revendication 1 ou 2, dans lequel ladite portion de raccordement (19) est une partie intégrante de ladite structure support (3) et s'étend entre des portions d'extrémité (14a, 15b) de deux bords consécutifs (14, 15) de l'ouverture (13) en les reliant; ladite structure support (3) étant plate.

4. Moule de cuisson selon l'une quelconque des revendications précédentes, dans lequel ladite structure support (3) et ledit plateau (2) sont réalisés principalement en papier ou carton mince, de préférence à usage alimentaire.

5. Moule de cuisson selon l'une quelconque des revendications précédentes dans lequel chaque arête (9, 10, 11, 12) formée entre deux parois latérales consécutives comporte un évidement (18); chaque évidement (18) étant susceptible d'engagement dans une portion de raccordement respective (19) entre deux bords de ladite ouverture (13).

6. Moule de cuissons selon l'une quelconque des revendications précédentes dans lequel chaque paroi latérale (5, 6, 7, 8) comporte un premier côté (5a, 6a, 7a, 8a) relié à la paroi de fond (4), et un deuxième côté (5b, 6b, 7b, 8b) opposé au premier côté et en vis-à-vis d'une section d'entrée de la cavité de logement du plateau (2); lesdites parois latérales (5, 6, 7, 8) étant de forme trapézoïdale et ayant de préférence lesdits deuxièmes côtés (5b, 6b, 7b, 8b) de dimension plus large que les premiers côtés respectifs (5a, 6a, 7a, 8a) à définir une forme tronconique du plateau (2).

7. Moule de cuisson selon l'une quelconque des revendications précédentes dans lequel lesdits bords (14, 15, 16, 17) de l'ouverture (13) dans la structure support (3) sont en contact avec lesdites parois latérales (5, 6, 7, 8) du plateau (2) à la suite de l'engagement de la portion de raccordement (19) dans l'évidement (18).

8. Moule de cuisson selon l'une quelconque des revendications précédentes dans lequel deux parois opposées (5, 7) desdites parois latérales (5, 6, 7, 8) du plateau (2) comportent deux rabats (22, 23), les deux autres parois latérales opposées (6, 8) comprenant elles aussi deux pièces terminales d'un seul tenant avec lesdits rabats (23) à définir une structure à plusieurs couches fermée vers l'extérieur dans laquelle lesdits rabats (23) sont repliés et en contact avec les pièces terminales à leur tour repliées, lesquelles sont positionnées en parallèle et au contact de ladite paroi latérale (6; 8).

9. Moule de cuisson selon l'une quelconque des revendications précédentes dans lequel ledit plateau (2) est réalisé à partir d'une seule feuille de papier et est obtenu d'une ébauche plate.

10. Ébauche plate réalisée de préférence en papier ou carton mince à usage alimentaire, pour fabriquer un plateau de réception pour produits alimentaires, comprenant:
- un panneau central (25) pour définir une paroi de fond (4) du plateau (2),
- une pluralité de panneaux latéraux (26, 27, 28, 29) reliés sur leur périphérie au panneau central (25) par des lignes d'affaiblissement respectives (30, 31, 32, 33) à définir une pluralité de parois latérales (5, 6, 7, 8) du plateau (2),
- au moins un (26) desdits panneaux (26, 27, 28, 29) comprenant:
· au moins un rabat (34) à définir une arête du plateau (2) en combinaison avec un panneau latéral adjacent (27),
**caractérisé en ce que** ledit au moins un panneau latéral (26) comprenant ledit rabat a:
- au moins deux entailles parallèles (36) s'étendant entre ledit panneau latéral (26) et ledit rabat (34) à définir un évidement (18) dans ladite arête (9).

11. Ébauche selon la revendication 10, comprenant une première paire desdits panneaux (26, 28) et une deuxième paire desdits panneaux (27, 29) qui sont symétriques par rapport au panneau central (25); chaque panneau latéral (26, 28) de ladite première paire comprenant respectivement deux rabats (34) et au moins deux entailles parallèles (36) s'étendant entre le panneau latéral (26, 28) et le premier desdits deux rabats (34) et au moins deux entailles parallèles (36) s'étendant entre ledit panneau latéral (26, 28) et le deuxième desdits deux rabats (34) à définir quatre évidements (18) dans un nombre égal d'arêtes (9, 10, 11, 12).

12. Ébauche selon la revendication 11, dans laquelle chaque paire desdites entailles (36) définit une portion repliable (37) destinée à faire saillie vers l'intérieur du plateau (2) pour définir un élément de renforcement pour lesdits évidements (18), ou en alternative dans laquelle lesdites entailles (36) sont définies par un enlèvement de matière dudit panneau latéral (26, 28) et du deuxième desdits rabats (34) de manière à définir un trou dans lesdites parois.

13. Procédé de fabrication d'un moule de cuisson **caractérisé en ce qu'**il comporte les étapes de:
- découper à l'emporte-pièce une première feuille de carton mince à usage alimentaire de manière à obtenir une ébauche (24) selon la revendication 12,
- découper à l'emporte-pièce une deuxième feuille de carton mince à usage alimentaire pour définir au moins une ouverture (13) délimitée par une pluralité de bords consécutifs (14, 15, 16, 17) et une portion de raccordement (19) en correspondance avec chaque paire de bords consécutifs,
- replier ladite ébauche (24) le long des lignes d'affaiblissement (30, 31, 32, 33) pour définir une paroi de fond (4) et quatre parois latérales (5, 6, 7, 8),
- replier chaque rabat (34) vers une surface prédéterminée d'une paroi latérale correspondante (27, 29) de la deuxième paire de panneaux latéraux pour définir un plateau (2) ayant quatre arêtes (9, 10, 11, 12),
- insérer ledit plateau (2) dans ladite ouverture (13) exerçant force pour l'introduction des portions de raccordement (19) dans les évidement correspondants (18).
